# EUROPEAN PATENT APPLICATION

(11) **EP 4 435 051 A1**
(43) Date of publication of application: **25.09.2024**
(21) Application number: 22893102.8
(22) Date of filing: 02.11.2022
(51) Int. Cl.: C08L 69/00, C08L 101/04, C08L 33/12, C08K 5/49, C08K 5/5435

(54) **THERMOPLASTIC RESIN COMPOSITION AND MOLDED PRODUCT FORMED THEREFROM**

(30) Priority: 15.11.2021 KR 20210156878
(71) Applicant: Lotte Chemical Corporation, Seoul, 05551 (KR)
(72) Inventor: CHOI, Ki Hong, Uiwiang-si Gyeonggi-do 16073 (KR); KANG, Tae Gon, Uiwiang-si Gyeonggi-do 16073 (KR); SHIN, Dong Yeop, Uiwiang-si Gyeonggi-do 16073 (KR); SHIN, Ye Seul, Uiwiang-si Gyeonggi-do 16073 (KR); YANG, Sung Woo, Uiwiang-si Gyeonggi-do 16073 (KR); LEE, Seo Yun, Uiwiang-si Gyeonggi-do 16073 (KR); HA, Dong In, Uiwiang-si Gyeonggi-do 16073 (KR)
(74) Representative: Germain Maureau
(86) International application number: PCT/KR2022/017045
(87) International publication number: WO 2023/085680

(57) **Abstract**

A thermoplastic resin composition of the present invention comprises: approximately 100 parts by weight of polycarbonate resin including approximately 70-95 wt% of linear polycarbonate resin and approximately 5-30 wt% of branched polycarbonate resin; approximately 10-30 parts by weight of a phosphorus-based flame retardant; approximately 0.01-0.5 parts by weight of a fluoropolymer capsulated with methyl methacrylate; and approximately 0.01-0.5 parts by weight of an alkoxysilane-based compound. The thermoplastic resin composition has excellent transparency, flame retardancy, impact resistance, balance of physical properties thereof, and the like.

## Description

### [Technical Field]

The present invention relates to a thermoplastic resin composition and a molded product formed therefrom. More particularly, the present invention relates to a thermoplastic resin composition that exhibits good properties in terms of transparency, flame retardancy, impact resistance, balance therebetween, and the like, and a molded product formed therefrom.

### [Background Art]

As engineering plastics, polycarbonate resins have good properties in terms of impact resistance, heat resistance, dimensional stability, weather resistance, flame retardancy, electrical properties, transparency, and the like, and are usefully applied to lenses requiring light transmission, transmitters/receivers for IR communication, housings of electric/electronic products, interior/exterior materials of office equipment, and the like.

In order to impart a high level of transmittance and flame retardancy to a thermoplastic resin composition comprising a polycarbonate resin, a branched polycarbonate resin is applied. However, when the amount of the branched polycarbonate resin exceeds a certain level, there can be a concern of rapid deterioration in impact resistance of the resin composition.

Therefore, there is a need for development of a thermoplastic resin composition having good properties in terms of transparency, flame retardancy, impact resistance, balance therebetween, and the like.

The background technique of the present invention is disclosed in Korean Patent Laid-open Publication No. 10-2013-0090337.

### [Disclosure]

### [Technical Problem]

It is one object of the present invention to provide a thermoplastic resin composition having good properties in terms of transparency, flame retardancy, impact resistance, balance therebetween, and the like.

It is another object of the present invention to provide a molded product formed of the thermoplastic resin composition.

The above and other objects of the present invention can be achieved by embodiments of the present invention described below.

### [Technical Solution]

1. One aspect of the present invention relates to a thermoplastic resin composition. The thermoplastic resin composition comprises: about 100 parts by weight of a polycarbonate resin comprising about 70% by weight (wt%) to about 95 wt% of a linear polycarbonate resin and about 5 wt% to about 30 wt% of a branched polycarbonate resin; about 10 parts by weight to about 30 parts by weight of a phosphorus flame retardant; about 0.01 parts by weight to about 0.5 parts by weight of a fluoropolymer encapsulated with methyl methacrylate; and about 0.01 parts by weight to about 0.5 parts by weight of an alkoxy silane compound.
2. In embodiment 1, the linear polycarbonate resin may have a melt-flow index (MI) of about 5 g/10 min to about 20 g/10 min, as measured at 300°C under a load of 1.2 kg in accordance with ISO 1133.
3. In embodiment 1 or 2, the branched polycarbonate resin may have a melt-flow index (MI) of about 1 g/10 min to about 10 g/10 min, as measured at 300°C under a load of 1.2 kg in accordance with ISO 1133.
4. In embodiments 1 to 3, the branched polycarbonate resin may comprise about 0.05 parts by mole to about 2 parts by mole of a tri- or higher valent polyfunctional compound relative to a total of 100 parts by mole of diphenols used in polymerization.
5. In embodiments 1 to 4, the fluoropolymer encapsulated with methyl methacrylate may comprise about 30 wt% to about 70 wt% of a fluoropolymer and about 30 wt% to about 70 wt% of methyl methacrylate.
6. In embodiments 1 to 5, the alkoxy silane compound may comprise at least one of glycidoxypropyltrimethoxysilane, 3,4-epoxycyclohexylethyltrimethoxysilane, glycidoxypropyldiethoxysilane, and glycidoxypropyltriethoxysilane.
7. In embodiments 1 to 6, the phosphorus flame retardant and the fluoropolymer encapsulated with methyl methacrylate may be present in a weight ratio of about 1:0.001 to about 1:0.03.
8. In embodiments 1 to 7, the fluoropolymer encapsulated with methyl methacrylate and the alkoxy silane compound may be present in a weight ratio of about 1:0.1 to about 1:5.
9. In embodiments 1 to 8, the thermoplastic resin composition may have a light transmittance of about 93% or more, as measured on a 2.5 mm thick specimen in accordance with ASTM D1003.
10. In embodiments 1 to 9, the thermoplastic resin composition may have a flame retardancy of V-0 or higher, as measured on a 2 mm thick specimen in accordance with UL-94.
11. In embodiments 1 to 10, the thermoplastic resin composition may have a notched Izod impact strength of about 5 kgf·cm/cm to about 15 kgf cm/cm, as measured on a 1/8" thick specimen in accordance with ASTM D256.
12. Another aspect of the present invention relates to a molded product. The molded product is formed of the thermoplastic resin composition according to any one of embodiments 1 to 11.

### [Advantageous Effects]

The present invention provides a thermoplastic resin composition having good properties in terms of transparency, flame retardancy, impact resistance, balance therebetween, and the like, and a molded product formed therefrom.

### [Best Mode]

Hereinafter, embodiments of the present invention will be described in detail.

A thermoplastic resin composition according to the present invention comprises: (A) a polycarbonate resin; (B) a phosphorus flame retardant; (C) a fluoropolymer encapsulated in methyl methacrylate; and (D) an alkoxy silane compound.

As used herein to represent a specific numerical range, "a to b" means "≥a and ≤b".

### (A) Polycarbonate resin

A polycarbonate resin according to one embodiment of the present invention serves to impart transparency and flame retardancy to a thermoplastic resin composition and comprises (A-1) a linear polycarbonate resin and (A-2) a branched polycarbonate resin.

### (A-1) Linear polycarbonate resin

The linear polycarbonate resin according to one embodiment of the present invention may be any linear polycarbonate resin used in typical thermoplastic resin compositions. For example, the linear polycarbonate resin may be prepared by reacting diphenols (aromatic diol compounds) with a precursor, such as phosgene, halogen formate, carbonate diester, and the like.

In some embodiments, the diphenols may include, for example, 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, and the like, without being limited thereto. For example, the diphenols may be 2,2-bis(4-hydroxyphenyl)propane, 2,2-bis(3,5-dichloro-4-hydroxyphenyl)propane, or 1,1-bis(4-hydroxyphenyl)cyclohexane, more specifically 2,2-bis(4-hydroxyphenyl)propane, which is also referred to as bisphenol-A.

In some embodiments, the linear polycarbonate resin may have a weight average molecular weight (Mw) of about 10,000 to about 50,000 g/mol, for example, about 15,000 to about 40,000 g/mol, as measured by gel permeation chromatography (GPC). Within this range, the thermoplastic resin composition (molded product) can have good fluidity (processability) and the like.

In some embodiments, the linear polycarbonate resin may have a melt-flow index (MI) of about 5 to about 20 g/10 min, for example, about 8 to about 18 g/10 min, as measured at 300°C under a load of 1.2 kg in accordance with ISO 1133. In addition, the linear polycarbonate resin may be a mixture of two or more linear polycarbonate resins having different melt-flow indexes. Within this range, the thermoplastic resin composition (molded product) can have good impact resistance, fluidity, and the like.

In some embodiments, the linear polycarbonate resin may be present in an amount of about 70 wt% to about 95 wt%, for example, about 75 wt% to about 90 wt%, based on 100 wt% of the total polycarbonate resins. If the content of the linear polycarbonate resin is less than about 70 wt%, the resin composition can suffer from deterioration in impact resistance and the like, and if the content of the linear polycarbonate resin exceeds about 95%, the resin composition can suffer from deterioration in flame retardancy and the like.

### (A-2) Branched polycarbonate resin

The branched polycarbonate resin according to one embodiment of the present invention may be any branched polycarbonate resin used in typical thermoplastic resin compositions. For example, the branched aromatic polycarbonate resin may be prepared by reacting diphenols (aromatic diol compounds) and a tri- or higher valent polyfunctional compound with a precursor, for example, phosgene, halogen formate, carbonate diester, and the like.

In embodiments, the diphenol may include, for example, 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, and the like, without being limited thereto. For example, the diphenols may be 2,2-bis(4-hydroxyphenyl)propane, 2,2-bis(3,5-dichloro-4-hydroxyphenyl)propane, or 1,1-bis(4-hydroxyphenyl)cyclohexane, more specifically 2,2-bis(4-hydroxyphenyl)propane, which is also referred to as bisphenol-A.

In some embodiments, the tri- or higher valent polyfunctional compound may be a compound having a tri- or higher valent phenol group, for example, 1,1,1-tris(4-hydroxyphenyl)ethane and the like.

In some embodiments, the tri- or higher valent polyfunctional compound may be present in an amount of about 0.05 to about 2 parts by mole, for example, about 0.06 to about 1.8 parts by mole, relative to 100 parts by mole of the diphenols. Within this range, the thermoplastic resin composition (molded product) can have good flame retardancy, fluidity, and the like.

In some embodiments, the branched polycarbonate resin may have a melt-flow index (MI) of about 1 to about 10 g/10 min, for example, about 1.5 to about 6 g/10 min, as measured at 300°C under a load of 1.2 kg in accordance with ISO 1133. Within this range, the thermoplastic resin composition (molded product) can have good impact resistance, flame retardancy, and the like.

In some embodiments, the branched polycarbonate resin may be present in an amount of about 5 to about 30 wt%, for example, about 10 to about 25 wt%, based on 100 wt% of the total polycarbonate resins. If the content of the branched polycarbonate resin is less than about 5 wt%, the resin composition can suffer from deterioration in flame retardancy and the like, and if the content of the branched polycarbonate resin exceeds about 30 wt%, the resin composition can suffer from deterioration in impact resistance, fluidity, and the like.

### (B) Phosphorus flame retardant

The phosphorus flame retardant according to one embodiment of the present invention may be any phosphorus flame retardant used in typical thermoplastic resin compositions. For example, the phosphorus flame retardant may include a phosphate compound, a phosphonate compound, a phosphinate compound, a phosphine oxide compound, a phosphazene compound, a metal salt thereof, and the like. These compounds may be used alone or as a mixture thereof.

In some embodiments, the phosphorus flame retardant may include an aromatic phosphoric acid ester compound (phosphate compound) represented by Formula 1. 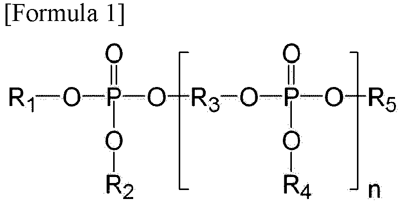 where R₁, R₂, R₄ and R₅ are each independently a hydrogen atom, a C₆ to C₂₀ (6 to 20 carbon atoms) aryl group, or a C₁ to C₁₀ alkyl group-substituted C₆ to C₂₀ aryl group; R₃ is a C₆ to C₂₀ arylene group or a C₁ to C₁₀ alkyl group-substituted C₆ to C₂₀ arylene group, for example, derivatives of dialcohols, such as resorcinol, hydroquinone, bisphenol-A, bisphenol-S, and the like; and n is an integer of 0 to 10, for example, 0 to 4.

When n is 0 in Formula 1, examples of the aromatic phosphoric ester compound may include diaryl phosphates, such as diphenyl phosphate and the like, triphenyl phosphate, tricresyl phosphate, trixylenyl phosphate, tri(2,6-dimethylphenyl)phosphate, tri(2,4,6-trimethylphenyl)phosphate, tri(2,4-di-tert-butylphenyl)phosphate, tri(2,6-dimethylphenyl)phosphate, and the like; when n is 1 in Formula 1, examples of the aromatic phosphoric ester compound may include bisphenol-A bis(diphenyl phosphate), resorcinol bis(diphenyl phosphate), resorcinol bis[bis(2,6-dimethylphenyl)phosphate], resorcinol bis[bis(2,4-di-tert-butylphenyl)phosphate], hydroquinone bis[bis(2,6-dimethylphenyl)phosphate], hydroquinone bis(diphenyl phosphate], hydroquinone bis[bis(2,4-di-tert-butylphenyl)phosphate], and the like; and when n is 2 in Formula 1, the aromatic phosphoric ester compound may include an oligomer type phosphoric acid ester compound and the like, without being limited thereto. These compounds may be used alone or as a mixture thereof.

In some embodiments, the phosphorus flame retardant may be present in an amount of about 10 to about 30 parts by weight, for example, about 12 to about 25 parts by weight, relative to about 100 parts by weight of the polycarbonate resin. If the content of the phosphorus flame retardant is less than about 10 parts by weight relative to about 100 parts by weight of the polycarbonate resin, the resin composition (molded product) can suffer from deterioration in flame retardancy, fluidity, and the like, and if the content of the phosphorus flame retardant exceeds about 30 parts by weight, the resin composition (molded product) can suffer from deterioration in impact resistance and the like.

### (C) Fluoropolymer encapsulated with methyl methacrylate

The fluoropolymer encapsulated with methyl methacrylate according to one embodiment of the present invention may be applied to the polycarbonate resin together with the phosphorus compound, the alkoxy silane compound, and the like to improve transparency, flame retardancy, impact resistance, balance therebetween, and the like of the thermoplastic resin composition. For example, the fluoropolymer encapsulated with methyl methacrylate may be prepared by encapsulating a fluoropolymer, such as polytetrafluoroethylene (PTFE), which is typically used as a flame retardant agent, in methyl methacrylate (MMA).

In some embodiments, the fluoropolymer encapsulated with methyl methacrylate may comprise about 30 to about 70 wt%, for example, about 40 to about 60 wt%, of the fluoropolymer and about 30 to about 70 wt%, for example, about 40 to about 60 wt%, of methyl methacrylate. Within this range, the thermoplastic resin composition (molded product) can have good transparency, flame retardancy, and the like.

In some embodiments, the fluoropolymer encapsulated with methyl methacrylate may be present in an amount of about 0.01 to about 0.5 parts by weight, for example, about 0.05 to about 0.4 parts by weight, relative to about 100 parts by weight of the polycarbonate resin. If the content of the fluoropolymer encapsulated with methyl methacrylate is less than about 0.01 parts by weight, the resin composition can suffer from deterioration in flame retardancy and the like, and if the content of the fluoropolymer encapsulated with methyl methacrylate exceeds about 0.5 parts by weight, the resin composition can suffer from deterioration in transparency, impact resistance, and the like.

In some embodiments, the phosphorus flame retardant (B) and the fluoropolymer encapsulated with methyl methacrylate (C) may be present in a weight ratio (B:C) of about 1:0.001 to about 1:0.03, for example, about 1:0.002 to about 1:0.025. Within this range, the thermoplastic resin composition (molded product) can exhibit good properties in terms of transparency, flame retardancy, fluidity, and the like.

### (D) Alkoxy silane compound

The alkoxy silane compound according to one embodiment of the present invention may be applied to the polycarbonate resin together with the phosphorus compound, the fluoropolymer encapsulated in methyl methacrylate, and the like to improve transparency, flame retardancy, impact resistance, balance therebetween, and the like of the thermoplastic resin composition.

In some embodiments, the alkoxy silane compound may include glycidoxypropyltrimethoxysilane, 3,4-epoxycyclohexylethyltrimethoxysilane, glycidoxypropyldiethoxysilane, glycidoxypropyltriethoxysilane, combinations thereof, and the like. Preferably, the alkoxy silane compound includes glycidoxypropyltrimethoxysilane and the like.

In some embodiments, the alkoxy silane compound may be present in an amount of about 0.01 to about 0.5 parts by weight, for example, about 0.05 to about 0.4 parts by weight, relative to about 100 parts by weight of the polycarbonate resin. If the content of the alkoxy silane compound is less than about 0.01 parts by weight relative to about 100 parts by weight of the polycarbonate resin, the resin composition can suffer from deterioration in flame retardancy and the like, and if the content of the alkoxy silane compound exceeds about 0.5 parts by weight, the resin composition can suffer from deterioration in impact resistance and the like.

In some embodiments, the fluoropolymer encapsulated with methyl methacrylate (C) and the alkoxy silane compound (D) may be present in a weight ratio (C:D) of about 1:0.1 to about 1:5, for example, about 1:0.2 to about 1:4. Within this range, the thermoplastic resin composition (molded product) can exhibit good properties in terms of flame retardancy, impact resistance, and the like.

The thermoplastic resin composition according to one embodiment of the present invention may further comprise additives used in typical thermoplastic resin compositions. The additives may include impact modifiers, lubricants, nucleating agents, stabilizers, release agents, pigments, dyes, mixtures thereof, and the like, without being limited thereto. The additives may be present in an amount of about 0.001 to about 40 parts by weight, for example, about 0.1 to about 10 parts by weight, relative to about 100 parts by weight of the polycarbonate resin.

According to one embodiment of the present invention, the thermoplastic resin composition may be prepared in pellet form by mixing the above components, followed by melt extrusion of the mixture in a typical twin-screw extruder at about 200°C to about 280°C, for example, about 220°C to about 260°C.

In some embodiments, the thermoplastic resin composition may have a light transmittance of about 93% or more, for example, about 94% to about 99%, as measured on a 2.5 mm thick specimen in accordance with ASTM D1003.

In some embodiments, the thermoplastic resin composition may have a flame retardancy of V-0 or higher, as measured on a 2 mm thick specimen inn accordance with UL-94.

In some embodiments, the thermoplastic resin composition may have a notched Izod impact strength of about 5 to about 15 kgf·cm/cm, for example, about 5.3 to about 10 kgf·cm/cm, as measured on a 1/8" thick specimen in accordance with ASTM D256.

A molded article according to the present invention is formed of the thermoplastic resin composition set forth above. The thermoplastic resin composition may be prepared in pellet form. The prepared pellets may be produced into various molded products (articles) by various molding methods, such as injection molding, extrusion, vacuum molding, casting, and the like. These molding methods are well known to those skilled in the art to which the present invention pertains. The molded products have good properties in terms of transparency, flame retardancy, impact resistance, balance therebetween, and the like, and are useful as materials for lenses requiring light transmission and transmitters/receivers for IR communication, interior/exterior materials for electronic devices, interior/exterior materials for automobiles, and the like.

### [Mode for Invention]

Next, the present invention will be described in more detail with reference to some examples. It should be understood that these examples are provided for illustration only and are not to be construed in any way as limiting the invention.

### EXAMPLE

Details of components used in Examples and Comparative Examples are as follows.

### (A) Polycarbonate resin

### (A1) Linear polycarbonate resin

A bisphenol-A type polycarbonate resin having a melt-flow index (MI) of 15 g/10 min as measured at 300°C under a load of 1.2 kg in accordance with ISO 1133 was used.

### (A2) Branched polycarbonate resin

A branched polycarbonate resin (manufacturer: Sabic, product name: PK-2870) having a melt-flow index (MI) of 2.5 g/10 min as measured at 300°C under a load of 1.2 kg in accordance with ISO 1133 was used.

### (B) Phosphorus flame retardant

An oligomer type bisphenol-A diphosphate (bisphenol-A diphosphate, manufacturer: Yoke Chemical Co., Ltd., product name: YOKE BDP) was used.

### (C) Encapsulated fluoropolymer

(C1) Polytetrafluoroethylene (PTFE) encapsulated in methyl methacrylate (MMA) (MMA-PTFE, manufacturer: Focera, product name: Xflon-ACL) was used.

(C2) Polytetrafluoroethylene (PTFE) encapsulated in styrene-acrylonitrile polymer (SAN) (SAN-PTFE, manufacturer: Hannanotech Co., Ltd., product name: FS-200) was used.

### (D) Alkoxy silane compound

Glycidoxypropyltrimethoxysilane (manufacturer: Crompton Specialties Co., Ltd., product name: Silquest A-187) was used.

### Examples 1 to 9 and Comparative Examples 1 to 9

The aforementioned components were mixed in amounts as listed in Tables 1, 2, 3, and 4, followed by extrusion at 250°C, thereby preparing a thermoplastic resin composition in pellet form. Here, extrusion was performed using a twin-screw extruder (L/D: 36, diameter: 45 mm). The prepared pellets were dried at 100°C for 4 hours or more and then subjected to injection molding using a 10 oz. injection machine (molding temperature: 230°C, mold temperature: 60°C), thereby preparing specimens. The prepared specimens were evaluated as to the following properties and results are shown in Tables 1, 2, 3, and 4.

### Property evaluation

(1) Transparency: Light transmittance (unit: %) was measured on a 2.5 mm thick specimen in accordance with ASTM D1003.
(2) Flame retardancy: Flame retardancy was measured on a 2 mm thick specimen by the UL-94 vertical test method.
(3) Impact resistance: Notched Izod impact strength (unit: kgf cm/cm) was measured on a 1/8" thick specimen in accordance with ASTM D256.

**Table 1**

| | | Example | | | |
|---|---|---|---|---|---|
| | | 1 | 2 | 3 | 4 |
| (A) (wt%) | (A1) | 75 | 90 | 75 | 75 |
| | (A2) | 25 | 10 | 25 | 25 |
| (B) (parts by weight) | | 17 | 17 | 12 | 25 |
| (C1) (parts by weight) | | 0.1 | 0.1 | 0.1 | 0.1 |
| (C2) (parts by weight) | | - | - | - | - |
| (D) (parts by weight) | | 0.1 | 0.1 | 0.1 | 0.1 |
| Light Transmittance (%) | | 95 | 95 | 95 | 97 |
| Flame Retardancy | | V-0 | V-0 | V-0 | V-0 |
| Notched Izod Impact Strength (kgf·cm/cm) | | 6.1 | 8.5 | 8.3 | 5.5 |

| | | | | | |
|---|---|---|---|---|---|
| * Parts by weight: parts by weight relative to 100 parts by weight of polycarbonate resin (A) | | | | | |

**Table 2**

| | | Example | | | | |
|---|---|---|---|---|---|---|
| | | 5 | 6 | 7 | 8 | 9 |
| (A) (wt%) | (A1) | 75 | 75 | 75 | 75 | 75 |
| | (A2) | 25 | 25 | 25 | 25 | 25 |
| (B) (parts by weight) | | 17 | 17 | 17 | 17 | 17 |
| (C1) (parts by weight) | | 0.05 | 0.4 | 0.1 | 0.1 | 0.1 |
| (C2) (parts by weight) | | - | - | - | - | - |
| (D) (parts by weight) | | 0.1 | 0.1 | 0.05 | 0.2 | 0.4 |
| Light Transmittance (%) | | 97 | 94 | 95 | 94 | 94 |
| Flame Retardancy | | V-0 | V-0 | V-0 | V-0 | V-0 |
| Notched Izod Impact Strength (kg·cm/cm) | | 6.0 | 5.3 | 6.3 | 6.1 | 5.7 |

| | | | | | | |
|---|---|---|---|---|---|---|
| * Parts by weight: parts by weight relative to 100 parts by weight of polycarbonate resin (A) | | | | | | |

**Table 3**

| | | Comparison example | | | |
|---|---|---|---|---|---|
| | | 1 | 2 | 3 | 4 |
| (A) (wt%) | (A1) | 65 | 99 | 75 | 75 |
| | (A2) | 35 | 1 | 25 | 25 |
| (B) (parts by weight) | | 17 | 17 | 5 | 35 |
| (C1) (parts by weight) | | 0.1 | 0.1 | 0.1 | 0.1 |
| (C2) (parts by weight) | | - | - | - | - |
| (D) (parts by weight) | | 0.1 | 0.1 | 0.1 | 0.1 |
| Light Transmittance (%) | | 94 | 95 | 95 | 96 |
| Flame Retardancy | | V-0 | V-2 | V-2 | V-0 |
| Notched Izod Impact Strength (kgf·cm/cm) | | 4.9 | 10.2 | 14.2 | 2.8 |

| | | | | | |
|---|---|---|---|---|---|
| * Parts by weight: parts by weight relative to 100 parts by weight of polycarbonate resin (A) | | | | | |

**Table 4**

| | | Comparison example | | | | |
|---|---|---|---|---|---|---|
| | | 5 | 6 | 7 | 8 | 9 |
| (A) (wt%) | (A1) | 75 | 75 | 75 | 75 | 75 |
| | (A2) | 25 | 25 | 25 | 25 | 25 |
| (B) (parts by weight) | | 17 | 17 | 17 | 17 | 17 |
| (C1) (parts by weight) | | 0.005 | 0.6 | - | 0.1 | 0.1 |
| (C2) (parts by weight) | | - | - | 0.1 | - | - |
| (D) (parts by weight) | | 0.1 | 0.1 | 0.1 | 0.005 | 0.6 |
| Light Transmittance (%) | | 95 | 83 | 89 | 95 | 94 |
| Flame Retardancy | V-2 | V-0 | V-0 | V-2 | V-0 | |
| Notched Izod Impact Strength (kgf·cm/cm) | 6.1 | 4.7 | 6.0 | 6.2 | 3.1 | |

| | | | | | | |
|---|---|---|---|---|---|---|
| * Parts by weight: Parts by weight for polycarbonate resin (A) 100 parts by weight | | | | | | |

From the above results, it could be seen that the thermoplastic resin compositions according to the present invention had good properties in terms of transparency (light transmittance), flame retardancy (flame retardancy), impact resistance (notched Izod impact strength), balance therebetween, and the like.

Conversely, it could be seen that the resin composition of Comparative Example 1 prepared using an insufficient amount of the linear polycarbonate resin and an excess of the branched polycarbonate resin suffered from deterioration in impact resistance and the like; the resin composition of Comparative Example 2 prepared using an excess of the linear polycarbonate resin and an insufficient amount of the branched polycarbonate resin suffered from deterioration in flame retardancy and the like; the resin composition of Comparative Example 3 prepared using an insufficient amount of the phosphorus flame retardant suffered from deterioration in flame retardancy and the like; the resin composition of Comparative Example 4 prepared using an excess of the phosphorus flame retardant suffered from deterioration in impact resistance and the like; the resin composition of Comparative Example 5 prepared using an insufficient amount of the fluoropolymer encapsulated with methyl methacrylate suffered from deterioration in flame retardancy and the like; the resin composition of Comparative Example 6 prepared using an excess of the fluoropolymer encapsulated with methyl methacrylate suffered from deterioration in transparency, impact resistance, and the like; and the resin composition of Comparative Example 7 prepared using SAN-PTFE (C2) instead of the fluoropolymer encapsulated with methyl methacrylate according to the present invention suffered from deterioration in transparency and the like. Further, it could be seen that the resin composition of Comparative Example 8 prepared using an insufficient amount of the alkoxy silane compound suffered from deterioration in flame retardancy, and the like and the resin composition of Comparative Example 9 prepared using an excess of the alkoxy silane compound suffered from deterioration in impact resistance and the like.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A thermoplastic resin composition comprising:
about 100 parts by weight of a polycarbonate resin comprising about 70 wt% to about 95 wt% of a linear polycarbonate resin and about 5 wt% to about 30 wt% of a branched polycarbonate resin;
about 10 parts by weight to about 30 parts by weight of a phosphorus flame retardant;
about 0.01 parts by weight to about 0.5 parts by weight of a fluoropolymer encapsulated with methyl methacrylate; and
about 0.01 parts by weight to about 0.5 parts by weight of an alkoxy silane compound.

2. The thermoplastic resin composition according to claim 1, wherein the linear polycarbonate resin has a melt-flow index (MI) of about 5 g/10 min to about 20 g/10 min, as measured at 300°C under a load of 1.2 kg in accordance with ISO 1133.

3. The thermoplastic resin composition according to claim 1 or 2, wherein the branched polycarbonate resin has a melt-flow index (MI) of about 1 g/10 min to about 10 g/10 min, as measured at 300°C under a load of 1.2 kg in accordance with ISO 1133.

4. The thermoplastic resin composition according to any one of claims 1 to 3, wherein the branched polycarbonate resin comprises about 0.05 parts by mole to about 2 parts by mole of a tri- or higher valent polyfunctional compound relative to a total of 100 parts by mole of diphenols used in polymerization.

5. The thermoplastic resin composition according to any one of claims 1 to 4, wherein the fluoropolymer encapsulated with methyl methacrylate comprises about 30 wt% to about 70 wt% of a fluoropolymer and about 30 wt% to about 70 wt% of methyl methacrylate.

6. The thermoplastic resin composition according to any one of claims 1 to 5, wherein the alkoxy silane compound comprises at least one of glycidoxypropyltrimethoxysilane, 3,4-epoxycyclohexylethyltrimethoxysilane, glycidoxypropyldiethoxysilane, and glycidoxypropyltriethoxysilane.

7. The thermoplastic resin composition according to any one of claims 1 to 6, wherein the phosphorus flame retardant and the fluoropolymer encapsulated with methyl methacrylate are present in a weight ratio of about 1:0.001 to about 1:0.03.

8. The thermoplastic resin composition according to any one of claims 1 to 7, wherein the fluoropolymer encapsulated with methyl methacrylate and the alkoxy silane compound are present in a weight ratio of about 1:0.1 to about 1:5.

9. The thermoplastic resin composition according to any one of claims 1 to 8, wherein the thermoplastic resin composition has a light transmittance of about 93% or more, as measured on a 2.5 mm thick specimen in accordance with ASTM D1003.

10. The thermoplastic resin composition according to any one of claims 1 to 9, wherein the thermoplastic resin composition has a flame retardancy of V-0 or higher, as measured on a 1 mm thick specimen in accordance with UL-94.

11. The thermoplastic resin composition according to any one of claims 1 to 10, wherein the thermoplastic resin composition has a notched Izod impact strength of about 5 to about 15 kgf cm/cm, as measured on a 1/8" thick specimen in accordance with ASTMD256.

12. A molded article formed of the thermoplastic resin composition according to any one of claims 1 to 11.
